# EUROPÄISCHE PATENTANMELDUNG

(11) **EP 4 108 808 A1**
(43) Veröffentlichungstag der Anmeldung: **28.12.2022**
(21) Anmeldenummer: 21181820.8
(22) Anmeldetag: 25.06.2021
(51) Int. Cl.: C25B 1/04, C25B 15/08

(54) **ELEKTROLYSESYSTEM MIT EINEM HILFSIONENTAUSCHER**

(71) Anmelder: Siemens Energy Global GmbH & Co. KG, 81739 München (DE)
(72) Erfinder: Choi, Du-Fhan, 40235 Düsseldorf (DE); Tremel, Alexander, 91096 Möhrendorf (DE); Ungerer, Markus, 91083 Baiersdorf (DE)

(57) **Zusammenfassung**

Die Erfindung betrifft ein Elektrolysesystem (01) mit mehreren Elektrolysezellen (31) zur Wasserelektrolyse. Ein anodenseitiger Wasserkreislauf (02) führt von einem anodenseitigen Auslass über einen Sauerstoff-Separator (34), eine Hauptpumpe (36) und eine Kühleinrichtung (37) zu einem anodenseitigen Einlass einer Anodenkammer (32). Ein kathodenseitiger Wasserkreislauf (03) führt analog von einem kathodenseitigen Auslass über einen Sauerstoff-Separator (34), eine Hauptpumpe (36) und eine Kühleinrichtung (37) zu einem kathodenseitigen Einlass einer Kathodenkammer (33). Eine Reinigung des Wassers bei Nicht-Betrieb des Elektrolysesystems (01) wird erreicht durch Ergänzung um einen anodenseitigen Teilstromzweig (04), welcher (04) von einem Abzweig (42) über einen Hilfsionentauscher (49) zu einem Sammelpunkt (43) im anodenseitigen Wasserkreislauf (02,12,22) führt.

## Beschreibung

Die Erfindung betrifft ein Elektrolysesystem zur elektrochemischen Zerlegung von Wasser zur Erzeugung von Wasserstoff und Sauerstoff mit mehreren Elektrolysezellen, wobei ein anodenseitiger Wasserkreislauf und ein kathodenseitiger Wasserkreislauf zur Abtrennung der Gase und Kühlung des Wassers vorhanden sind. Dabei gilt es die Reinheit des Wassers mittels Ionentauscher zu gewährleisten.

Elektrolysesysteme sind aus dem Stand der Technik in verschiedenen Ausführungen bekannt. In jedem Fall umfasst ein solches einen Elektrolyseur. Hierzu werden wiederum verschiedene Ausführungen eingesetzt, wobei häufig ein sogenannter PEM Elektrolyseur eingesetzt wird. Dieser weist eine Mehrzahl von Elektrolysezellen auf, welche durch eine Polymer-Elektrolyt-Membran in eine Anodenkammer und eine Kathodenkammer aufgeteilt sind. In den Elektrolysezellen findet die Wasserelektrolyse statt, wozu zumindest an der Anodenkammer ein Einlass vorhanden ist. An der Oberseite der Anodenkammer sowie an der Oberseite der Kathodenkammer befindet sich ein Auslass, über die jeweils das entstandene Gas mit einem Anteil Wasser abgeführt wird.

Auf einer Anodenseite gibt es üblicherweise einen Wasserkreislauf vom Auslass der Anodenkammer mit einem Sauerstoff-Separator, einer Umwälzpumpe, einer Kühlvorrichtung und einer Filteranordnung zum Einlass an der Anodenkammer. Um die hinreichende Reinheit des Wassers zu gewährleisten, wird vielfach ein Ionentauscher im anodenseitigen Wasserkreislauf eingesetzt.

Wenngleich sich die bekannten Ausführungen bewährt haben, so zeigt sich jedoch einerseits das Problem, dass der Ionentauscher bei voller Durchströmung im Wasserkreislauf größer als es zur Reinigung des Wassers erforderlich ist, dimensioniert werden muss. Weiterhin als nachteilig hat es sich gezeigt, dass bei längeren Stillstandszeiten die Wasserqualität im Elektrolyseur abnimmt und bei neuer Inbetriebnahme die Effizienz reduziert und die Lebensdauer beeinträchtigt ist.

Aufgabe der vorliegenden Erfindung ist es daher, eine Möglichkeit zur Verfügung zu stellen, die Reinheit des Wassers auch bei einem Nicht-Betrieb des Elektrolyseurs gewährleisten zu können und dabei den Aufwand für die Reinigung gering zu halten.

Die gestellte Aufgabe wird durch ein Elektrolysesystem nach der Lehre des Anspruchs 1 gelöst. Vorteilhafte Ausführungsformen sind Gegenstand der Unteransprüche.

Das gattungsgemäße Elektrolysesystem dient zur elektrochemischen Zerlegung von Wasser und somit zur Erzeugung von Wasserstoff und Sauerstoff. Dabei weist das Elektrolysesystem zumindest eine Elektrolyseeinheit auf. Die Elektrolyseeinheit umfasst wiederum mehrere Elektrolysezellen. Jede einzelne Elektrolysezelle besitzt dabei eine Anodenkammer und auf einer durch eine Membran getrennten gegenüberliegenden Seite eine Kathodenkammer. Um welche Art von Membran es sich hierbei handelt ist zunächst unerheblich, wobei vorzugsweise eine Polymer-Elektrolyt-Membran eingesetzt wird. In der Anodenkammer befindet sich eine Anode und gegenüberliegend in der Kathodenkammer eine Katode. Im Betrieb des Elektrolysesystems wird bestimmungsgemäß zwischen der Anode und der Katode eine Spannung angelegt.

Zur Durchführung des Verfahrens ist eine Wasserzufuhr zur Elektrolysezelle erforderlich. Weiterhin ist die getrennte Ableitung der entstehenden Gase zu gewährleisten. Hierzu weist das Elektrolysesystem einen anodenseitigen Wasserkreislauf auf. Dieser beginnt an einem anodenseitigen Auslass der Anodenkammer und führt über einen Wasserstoff-Separator, eine Hauptpumpe und eine Kühleinrichtung zurück zu einem anodenseitigen Einlass an der Anodenkammer. Die Reihenfolge der Elemente ist zunächst unerheblich und ebenso, ob weitere Einrichtungen im Wasserkreislauf vorhanden sind.

Auf der Kathodenseite erfolgt im Betrieb des Elektrolysesystems gattungsgemäß eine Ableitung des entstehenden Wasserstoffes zusammen mit einem Anteil Wasser von einem kathodenseitigen Auslass an der Kathodenkammer zu einem Wasserstoff-Separator. Vorzugsweise wird hierzu analog ein kathodenseitiger Wasserkreislauf eingesetzt, in dem sich weiterhin eine Hauptpumpe und eine Kühleinrichtung befindet. Der kathodenseitige Wasserkreislauf führt hierbei zu einem kathodenseitigen Einlass der Kathodenkammer.

Um nunmehr die Reinheit des Wassers in Stillstandszeiten des Elektrolysesystems gewährleisten zu können und gleichfalls den Aufwand für die Installation eines Ionentauschers im Rahmen zu halten wird erfindungsgemäß ein anodenseitiger Teilstromzweig mit einem darin angeordneten Hilfsionentauscher eingesetzt. Dabei beginnt der anodenseitige Teilstromzweig an einem Abzweig im anodenseitigen Wasserkreislauf und führt wieder zurück zu einem Sammelpunkt im anodenseitigen Wasserkreislauf.

Besonders bevorzugt wird eine analoge Anordnung auf der Kathodenseite eingesetzt. Entsprechend weist das Elektrolysesystem einen kathodenseitigen Teilstromzweig auf, welcher von einem Abzweig im kathodenseitigen Wasserkreislauf über einen Hilfsionentauscher zu einem Sammelpunkt im kathodenseitigen Wasserkreislauf führt.

Durch die erfindungsgemäße Ausführungsform mit einem Hilfsionentauscher im Teilstromzweig wird eine Reinigung des Wassers, bzw. eine Deionisierung ermöglicht, ohne dass eine Auslegung für den gesamten Wasserstrom erforderlich ist. Insbesondere ermöglicht diese Anordnung den Einsatz des Hilfsionentauschers mit dem Teilstromzweig, auch wenn das Elektrolysesystem ansonsten nicht im Einsatz ist.

Sofern im Folgenden kein Bezug auf die Anodenseite oder die Kathodenseite vorhanden ist, so gilt entsprechendes sowohl für die Anodenseite als auch für die Kathodenseite. Dabei ist es jedoch nicht erforderlich, dass beide Seiten übereinstimmend ausgeführt sind. Vielmehr ist es ebenso möglich zwei verschiedene Ausführungsformen für die Anodenseite und die Kathodenseite vorzusehen.

Die Anbindung des Teilstromzweiges an den jeweiligen Wasserkreislauf kann an unterschiedlicher Stelle erfolgen. Bevorzugt befindet sich der Abzweig zwischen der Elektrolysezelle auf der einen Seite und der Anordnung von Separator, Hauptpumpe und Kühleinrichtung auf der anderen Seite des Wasserkreislaufes. Analog befindet sich bevorzugt der Sammelpunkt gleichfalls zwischen der Elektrolysezelle auf der einen Seite und der Anordnung von Separator, Hauptpumpe und Kühleinrichtung auf der anderen Seite des Wasserkreislaufes. Hierdurch wird ein verkürzter Kreislauf durch die Elektrolysezelle und den Teilstromzweig mit dem Hilfsionentauscher ermöglicht, ohne dass eine Durchströmung des Separators, der Hauptpumpe und die Kühleinrichtung erforderlich sind.

Um eine Durchströmung der Elektrolysezelle und des Hilfsionentauschers im Nicht-Betrieb des Elektrolysesystems zu ermöglichen ist bevorzugt im Teilstromzweig eine Teilstrompumpe angeordnet.

Weiterhin ermöglicht die Anordnung eines Hilfsionentauschers im an den Wasserkreislauf angeschlossenen Teilstromzweig dessen Verwendung auch im Betrieb des Elektrolysesystems. Bei Vorhandensein einer Teilstrompumpe ist hierzu vorzugsweise ein über Ventile schaltbarer Bypass vorhanden, sodass eine Durchströmung des Teilstromzweiges ohne Betrieb der Teilstrompumpe möglich ist.

Durch die vorteilhafte Ausführungsform des Elektrolysesystems kann die Reinhaltung des Wassers auch im Betrieb des Elektrolysesystems bereits mit dem Hilfsionentauscher erreicht werden. Dabei erfolgt vorzugsweise eine Durchströmung des Teilstromzweiges parallel zur Elektrolysezelle, so dass lediglich der Wasserkreislauf mit der Strömung entsprechend auszulegen ist.

In einer weiteren bevorzugten Ausführungsform wird ein zusätzlicher Reinigungszweig an den Wasserkreislauf angeschlossen. Dabei ist im Reinigungszweig ein Hauptionentauscher angeordnet. Vorgesehen ist hierbei, dass ein gewisser Teil des Wassers im Wasserkreislauf durch den Reinigungszweig geführt wird. Da hierbei nur ein Teil des im Wasserkreislauf strömenden Wassers den Reinigungszweig durchströmt, ist eine Dimensionierung auf diesen geringeren Anteil und somit der Aufwand zur Installation reduziert.

Zur Realisierung stehen hierbei verschiedene Alternativen zur Verfügung. In einer ersten vorteilhaften Alternative wird der Reinigungszweig mit beiden Enden am Separator angeschlossen. Dabei ist es erforderlich, dass im Reinigungszweig eine Reinigungspumpe angeordnet wird, so dass eine Zirkulation aus dem Separator durch den Hauptionentauscher im Reinigungszweig zurück in den Separator ermöglicht wird.

Bevorzugt wird weiterhin im Reinigungszweig eine Kühleinrichtung angeordnet, welche die Leistungsfähigkeit des Hauptionentauscher positiv beeinflussen kann. Dabei befindet sich die Kühleinrichtung bevorzugt zwischen der Reinigungspumpe und dem Hauptionentauscher.

Bei einer zweiten vorteilhaften Alternative ist eine Reinigungspumpe nicht erforderlich, um eine Durchströmung durch den Reinigungszweig zu bewirken. Dabei kommt es gleichwohl zu einer Zirkulation des Wassers aus dem Separator und zurück in den Separator. Hierzu ist es notwendig, einen Abzweig vom Wasserkreislauf in Strömungsrichtung nachfolgend der Hauptpumpe anzuordnen. Das andere Ende des Reinigungszweiges ist dabei wiederum am Separator angeschlossen. Entsprechend wird hierbei die Zirkulation durch den Hauptionentauscher von der Hauptpumpe bewirkt.

Gleichfalls ist es in diesem Fall vorteilhaft, wenn eine Kühleinrichtung in Strömungsrichtung vor dem Hauptionentauscher vorhanden ist. Hierzu ist der Abzweig zum Reinigungszweig besonders bevorzugt in Strömungsrichtung nach der Kühleinrichtung im Wasserkreislauf anzuordnen, sodass keine separate Kühleinrichtung im Reinigungszweig erforderlich ist.

Bei Verwendung einer weiteren vorteilhaften Ausführungsform kann eine Zirkulation des Wassers vermieden werden, indem der Reinigungszweig abschnittsweise parallel zum Wasserkreislauf durchströmt wird. Vorzugsweise befindet sich hierbei ein Abzweig am Separator. Zur Gewährleistung der hinreichenden Durchströmung des Hauptionentauscher parallel zum Wasserkreislauf ist wiederum bevorzugt eine Reinigungspumpe vorzusehen. An welcher Stelle die Zusammenführung mit dem Wasserkreislauf erfolgt, ist demgegenüber von untergeordneter Bedeutung. Als geeignet erscheint jedoch vorzugsweise eine Anordnung eines Sammelpunktes vom Reinigungszweig am Wasserkreislauf in Strömungsrichtung nachfolgend der Hauptpumpe und bevorzugt nachfolgend der Kühleinrichtung im Wasserkreislauf.

In diesem Falle kann es auch vorteilhaft sein, eine Kühleinrichtung im Reinigungszweig in Strömungsrichtung vor dem Hauptionentauscher anzuordnen.

Grundsätzlich sollte das im Wasserkreislauf und durch den Elektrolyseur zirkulierende Wasser frei von Partikel jeglicher Art sein. Um jedoch zu verhindern, dass sich aus den durchströmten Elementen gelöste Partikel in der Anodenkammer respektive in der Kathodenkammer absetzen, ist es weiterhin besonders vorteilhaft, einen oder mehrere Filtereinrichtungen einzusetzen. Dabei kann vorgesehen sein, dass eine Filtereinrichtung unmittelbar im Wasserkreislauf und/oder im Teilstromzweig und/oder im Reinigungszweig angeordnet ist. Besonders vorteilhaft ist es dabei, wenn zu jedem Ionentauscher in Strömungsrichtung nachfolgend oder zumindest vor dem Einlass der Anodenkammer respektive dem Einlass der Kathodenkammer eine Filtereinrichtung vorhanden ist.

An dieser Stelle ist nochmal deutlich darauf hinzuweisen, dass es nicht erforderlich ist, dass die Anodenseite übereinstimmend mit der Kathodenseite ausgeführt ist.

Prozessbedingt kommt es in der Regel zu einem Übertritt von Wasser aus der Anodenkammer in die Kathodenkammer. Um eine Rückführung des Wassers von der Kathodenseite zur Anodenseite zu ermöglichen, ist in besonders vorteilhafter Weise eine Querstromverbindung vorhanden. Dabei stehen verschiedene Implementierungsmöglichkeiten zur Verfügung.

Unabhängig von der gewählten Anschlussvariante auf der Kathodenseite ist es in jedem Fall vorteilhaft, wenn die Querstromverbindung zum Sauerstoff-Separator des anodenseitigen Wasserkreislaufes führt.

In einer ersten vorteilhaften Variante führt die Querstromverbindung vom kathodenseitigen Wasserkreislauf zum anodenseitigen Wasserkreislauf. Dabei ist es besonders vorteilhaft, wenn die Querstromverbindung vom Wasserstoff-Separator des kathodenseitigen Wasserkreislaufes abzweigt.

In einer zweiten vorteilhaften Variante führt die Querstromverbindung vom kathodenseitigen Teilstromzweig zum anodenseitigen Wasserkreislauf. Dabei ist es besonders vorteilhaft, wenn die Querstromverbindung an einer Stelle stromab des Hilfsionentauscher abzweigt.

In einer dritten Variante beginnt die Querstromverbindung am kathodenseitigen Reinigungszweig. Ebenso wie zuvor ist es besonders vorteilhaft, wenn der Abzweig stromab des Hauptionentauschers angeordnet ist.

Besonders in der ersten Variante, aber auch bei den anderen beiden Varianten einsetzbar, wird vorteilhafterweise in der Querstromverbindung ein Querstromionentauscher und eine Querstrompumpe angeordnet. Hierdurch kann die Rückströmung des übergetretenen Wassers von der Kathodenseite zur Anodenseite aktiv herbeigeführt und dabei die Reinheit des Wassers gewährleistet werden.

Weiterhin ist in diesem Fall vorteilhaft in der Querstromverbindung eine Kühleinrichtung und/oder eine Filtereinrichtung vorhanden.

Demgegenüber ist in der zweiten Variante und der dritten Variante ein Ionentauscher sowie eine Pumpe in der Querstromverbindung nicht zwingend erforderlich, da bereits im Teilstromzweig respektive dem Reinigungszweig (je nach Ausführung) ein Ionentauscher vorhanden ist (weshalb auch der Abzweig vorzugsweise nachfolgend anzuordnen ist). Ebenso kann bereits durch die von einer jeweiligen Pumpe bewirkten Strömung im Teilstromzweig respektive dem Reinigungszweig die notwendige Strömung in der Querstromverbindung bewirkt werden.

In den nachfolgenden Figuren werden verschiedene beispielhafte Anordnungen für ein erfindungsgemäßes Elektrolysesystem skizziert. Es zeigen:
- Fig. 1: ein erstes Ausführungsbeispiel für ein erfindungsgemäßes Elektrolysesystem mit einer Querstromverbindung zwischen den beiden Separatoren;

- Fig. 2: ein zweites Ausführungsbeispiel für ein erfindungsgemäßes Elektrolysesystem, bei dem auf einen Reinigungszweig verzichtet wird;
- Fig. 3: ein drittes Ausführungsbeispiel für ein erfindungsgemäßes Elektrolysesystem mit einer Querstromverbindung vom Reinigungszweig zum Sauerstoff-Separator.

In den nachfolgenden Figuren werden die möglichen Anordnungen für ein erfindungsgemäßes Elektrolysesystem schematisch skizziert, wobei gleiche, wiederkehrende Elemente gleich bezeichnet sind. Weiterhin umfasst ein Elektrolysesystem in der Regel ein oder mehrere Elektrolyseure, wobei jedes wiederum mehrere Elektrolysezellen mit entsprechender Anodenkammer und Kathodenkammer aufweist. Wobei in den Darstellungen lediglich beispielhaft eine Elektrolysezelle skizziert ist. Auf den Aufbau eines Elektrolyseurs und der Elektrolysezelle soll an dieser Stelle nicht weiter eingegangen werden.

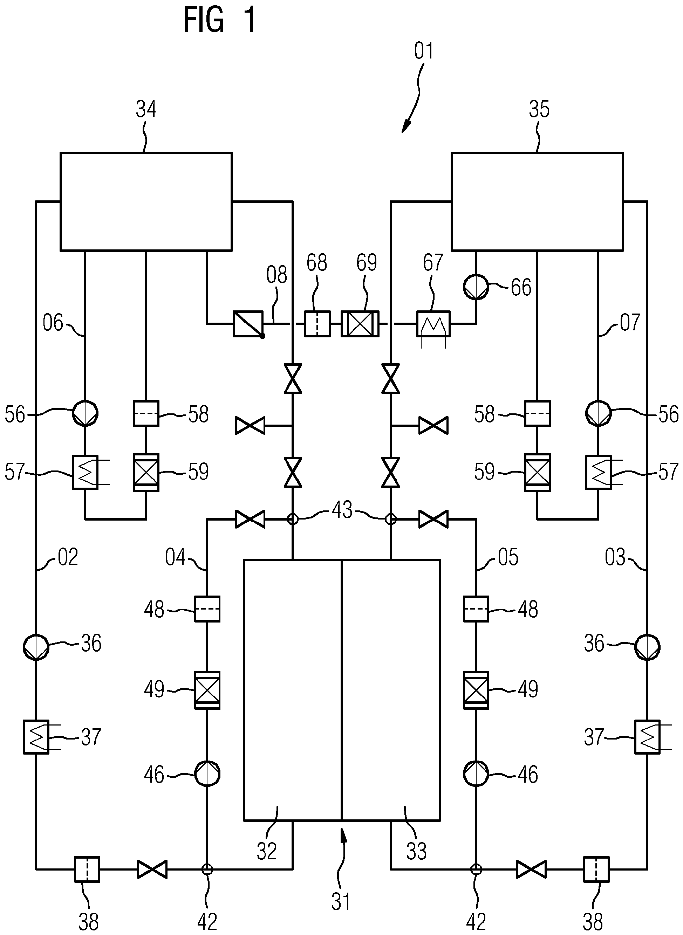

In der Fig. 1 wird nunmehr ein erstes Ausführungsbeispiel für ein Elektrolysesystem 01 dargestellt. Dieses 01 umfasst als wesentliches Element die Elektrolysezelle 31, welche 31 eine Anodenkammer 32 und eine Kathodenkammer 33 aufweist.

Angeschlossen an die Anodenkammer 32 ist ein anodenseitiger Wasserkreislauf 02, welcher 02 an einem Auslass der Anodenkammer 32 beginnt und über einen Wasserstoff-Separator 34 führt. Weiterhin befindet sich im Wasserkreislauf 02 eine Hauptpumpe 36 sowie eine Kühleinrichtung 37. Zwischen dieser 37 und einem Einlass an der Anodenkammer 32 ist weiterhin eine Filtereinrichtung 38 im Wasserkreislauf 02 angeordnet.

Die Kathodenseite ist analog aufgebaut mit einem an der Kathodenkammer 33 angeschlossenen kathodenseitigen Wasserkreislauf 03. Entsprechend beginnt dieser 03 analog an einem Auslass der Kathodenkammer 33 und führt zu einem Wasserstoff-Separator 35. Gleichfalls befindet sich im Wasserkreislauf 03 in Strömungsrichtung folgend eine Hauptpumpe 36, eine Kühleinrichtung 37 sowie eine Filtereinrichtung 38 bevor der Wasserkreislauf 03 am Einlass der Kathodenkammer 33 endet.

Wesentlich für die Erfindung, unabhängig von der konkreten Ausführung, ist die Anordnung eines Hilfsionentauschers 49 in einem anodenseitigen Teilstromzweig 04 und/oder in einem kathodenseitigen Teilstromzweig 05. Dabei ist der Teilstromzweig 04, 05 am jeweiligen Wasserkreislauf 02, 03 mit beiden Enden, einem Abzweig 42 und einem Sammelpunkt 43 angeschlossen.

Wie der Darstellung zu entnehmen ist, befindet sich auf einer Seite des Teilstromzweiges 04 bzw. 05 zwischen dem Abzweig 42 und dem Sammelpunkt 43 die Elektrolysezelle 31. Demgegenüber sind auf der anderen Seite des Teilstromzweiges 04 bzw. 05 der jeweilige Separator 34 bzw. 35 und die Hauptpumpe 36, die Kühleinrichtung 37 und die Filtereinrichtung 38 im jeweiligen Wasserkreislauf 02 bzw. 03 angeordnet.

Eine Aufgabe der Erfindung ist es, eine Reinigung des Wassers auch bei Stillstand des Elektrolysesystems, bei dem die Elektrolysezellen nicht unter Spannung stehen, zu ermöglichen. Hierzu ist im Teilstromzweig 04 bzw. 05 weiterhin eine Teilstrompumpe 46 angeordnet. Dazu wird ergänzend eine Filtereinrichtung 48 eingesetzt.

Diese Anordnung ermöglicht einerseits im Betrieb des Elektrolysesystems 01 eine Zirkulation des Wassers im jeweiligen Wasserkreislauf 02 bzw. 03 von und zu den Anodenkammern 32 respektive den Kathodenkammern 33.

Ist nunmehr das Elektrolysesystems 01 nicht im Betrieb, d. h. die Elektrolysezellen 31 sind nicht mit Strom versorgt, so kann die Hauptpumpe 36 ausgeschaltet sein und eine Zirkulation über den Teilstromzweig 04 bzw. 05 mittels der jeweiligen Teilstrompumpe 46 mit einer Deionisierung im Hilfsionentauscher 49 bewirkt werden. Entsprechend kann die Reinheit des Wassers auch über längere Zeiten des Stillstands des Elektrolysesystems 01 gewährleistet werden.

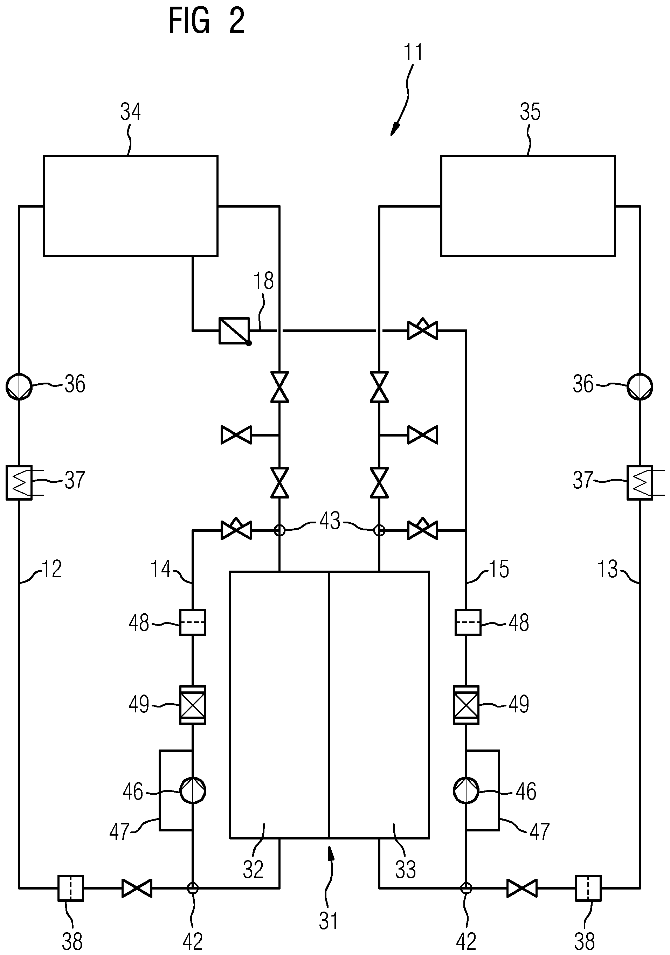

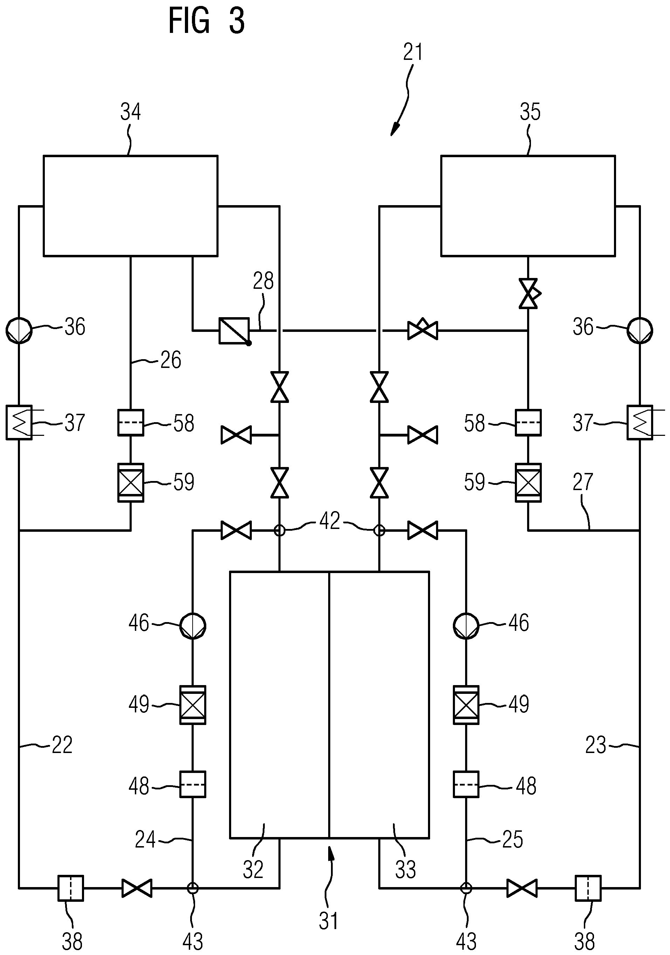

Der in Fig. 1 skizzierte anodenseitige Wasserkreislauf 02 und kathodenseitige Wasserkreislauf 03 beginnend an der Anodenkammer 32 respektive der Kathodenkammer 33 über den Separator 34,35, der Hauptpumpe 36, der Kühleinrichtung 37 und der Filtereinrichtung 38 ist wiederkehrend gleichfalls in den nachfolgenden Ausführungsformen aus Fig. 2 und Fig. 3 vorhanden.

Weiterhin findet sich auch in den beiden weiteren Ausführungsbeispielen in den Fig. 2 und 3 der Teilstromzweig 04 bzw. 05 mit der Teilstrompumpe 46 und dem Hilfsionentauscher 49, jeweils angeschlossen am Wasserkreislauf 02 bzw. 03.

In der Ausführung aus Fig. 1 ist vorgesehen, dass der Teilstromzweig 04 bzw. 05 nur zur Reinigung bei ausgeschalteter Hauptpumpe 36 durchströmt wird. Da in diesem Falle keine Gasbildung erfolgt, ist vorgesehen, dass eine entgegengesetzte Durchströmung durch die Anodenkammer 32 respektive die Kathodenkammer 33 erfolgt, als es der üblichen Durchströmung im Betrieb des Elektrolysesystems 01 entspricht.

Um die Wasserqualität auf beiden Seiten im Betrieb der Anlage zu gewährleisten, schlägt diese Ausführungsform vor, jeweils einen Reinigungszweig 06 bzw. 07 am jeweiligen Separator 34 bzw. 35 anzuschließen. Dabei führt der anodenseitige Reinigungskreis 06 vom Wasserstoff-Separator 34 über eine Reinigungspumpe 56 und eine Kühleinrichtung 57 durch einen Hauptionentauscher 59 und abschließend durch eine Filtereinrichtung 58 und zurück zum Wasserstoff-Separator 34. Auf der Kathodenseite erfolgt in diesem Beispiel der Aufbau analog mit einem kathodenseitigen Reinigungszweig 07 beginnend am Wasserstoff-Separator 35 über die Hauptpumpe 56, die Kühleinrichtung 57, durch den Hauptionentauscher 59 und die Filtereinrichtung 58 zurück zum Wasserstoff-Separator 35. Folglich gibt es eine Zirkulation aus und in den jeweiligen Separator 34 bzw. 35.

Der Darstellung ist weiterhin zu entnehmen, dass in diesem Ausführungsbeispiel eine Querstromverbindung 08 vom Wasserstoff-Separator 35 zum Sauerstoff-Separator 34 vorhanden ist. Dabei ist in der Querstromverbindung 08 eine Querstrompumpe 66, eine Kühleinrichtung 67 sowie ein Querstromionentauscher 69 und eine Filtereinrichtung 68 angeordnet.

Die Ausführung aus Fig. 2 stellt sich demgegenüber deutlich einfacher dar. Hier wird auf einen zusätzlichen Reinigungszweig verzichtet. Um auch hier die Deionisierung im Betrieb des Elektrolysesystems 11 gewährleisten zu können, wird der Teilstromzweig 14 respektive 15 mit dem jeweiligen Hilfsionentauscher 49 eingesetzt. Da in diesem Fall im Betrieb die jeweilige Hauptpumpe 36 die Zirkulation im Wasserkreislauf 12 respektive 13 bewirkt, ist weiterhin ein Bypass 47 zur Teilstrompumpe 46 vorgesehen. Es naheliegend, dass Ventile zumindest im Bypass (nicht dargestellt) zur Schaltung zwischen den Zuständen des Betriebs des Elektrolysesystems 11 mit einer Durchströmung des Wasserkreislaufes 12 respektive 13 und des Nicht-Betriebs mit einer Zirkulation nur durch den jeweiligen Teilstromzweig 14 bzw. 15 und die Anodenkammer 32 bzw. Kathodenkammer 33 notwendig sind.

Weiteres Unterscheidungsmerkmal gegenüber vorheriger Ausführung ist es, dass im Ausführungsbeispiel in Fig.2 eine Querstromverbindung 18 vom kathodenseitigen Teilstromzweig 15 zum Sauerstoff-Separator 34 vorgesehen ist. Mit dem Abzweig stromab des Hilfsionentauschers 49 ist bereits die Reinheit gewährleistet, sodass in der Querstromverbindung 18 kein weiterer Ionentauscher notwendig ist.

In der beispielhaften Ausführung aus Fig. 3 ist gleichfalls der an der Anodenkammer 32 respektive Kathodenkammer 33 der Elektrolysezelle 31 angeschlossene Wasserkreislauf 22 respektive 23 mit dem Sauerstoff-Separator 34 respektive Wasserstoff-Separator 35, der Hauptpumpe 36, der Kühleinrichtung 37 und der Filtereinrichtung 38 vorhanden.

Ebenso ist als für die Erfindung wesentlich der jeweilige Teilstromzweig 24 respektive 25 auf der Anodenseite und der Kathodenseite vorhanden, welcher 24, 25 von einem jeweiligem Abzweig 42 zu einem Sammelpunkt 43 im jeweiligen Wasserkreislauf 22 respektive 23 führt. Die Reihenfolge der Elemente vom Abzweig 42 zum Sammelpunkt 43 ist übereinstimmend mit den vorherigen Beispielen gewählt mit der Teilstrompumpe 46, dem Hilfsionentauscher 49 und der Filtereinrichtung 48.

Im Gegensatz zu den vorherigen Beispielen ist hier jedoch eine entgegengesetzte Strömungsrichtung im Teilstromzweig 24, 25 vorgesehen. Entsprechend befindet sich der Abzweig 42 zwischen dem Auslass an der Anodenkammer 32 respektive der Kathodenkammer 33 und dem Sauerstoff-Separator 34 respektive Wasserstoff-Separator 35. Der Sammelpunkt 43 ist dementsprechend vor dem Einlass angeordnet. Dabei ist vorgesehen, dass die Anodenkammer 32 respektive der Kathodenkammer 33 sowohl im Betrieb des Elektrolysesystems 21 mit einer Zirkulation durch den Wasserkreislauf 22 respektive 23 als auch im Nicht-Betrieb mit einer Zirkulation durch den Teilstromzweig 24 respektive 25 in gleicher Richtung erfolgt.

Ähnlich wie beim ersten Beispiel aus Fig. 1 ist auch hier in diesem Beispiel in Fig. 3 vorgesehen, dass ein Reinigungszweig 26 respektive 27 vorhanden ist. Mit einer Änderung des Anschlusses an den Wasserkreislauf 22 respektive 23 entfällt jedoch die Notwendigkeit einer Reinigungspumpe und einer zusätzlichen Kühleinrichtung im Reinigungszweig 26 respektive 27. Hierzu ist der Reinigungszweig 26, 27 am

Wasserkreislauf 22, 23 stromab der Hauptpumpe 36 und der Kühleinrichtung 37 angeschlossen. Im Reinigungszweig 26, 27 befindet sich der Hauptionentauscher 59 sowie eine Filtereinrichtung 58. Übereinstimmend mit dem Beispiel aus Fig. 1 führt in dieser Ausführung des Elektrolysesystems 21 der anodenseitige Reinigungszweig 26 zurück in den Sauerstoff-Separator 34 und der kathodenseitige Reinigungszweig 27 zurück in den Wasserstoff-Separator 35.

Eine Querstromverbindung 28 ist in diesem Fall am kathodenseitigen Reinigungszweig 27 angeschlossen, wobei der Abzweig stromab zum Hauptionentauscher 59 und der Filtereinrichtung 58 angeordnet ist. Hierdurch erübrigt sich die Anordnung eines Ionentauschers in der Querstromverbindung 28. Die Rückführung des übertretenden Wassers in den anodenseitigen Wasserkreislauf 22 erfolgt übereinstimmend mit den vorherigen Beispielen mit einem Anschluss der Querstromverbindung 28 mit dem Sauerstoff-Separator 34.

### Bezugszeichenliste

- 01,11,21: Elektrolysesystem
- 02,12,22: anodenseitiger Wasserkreislauf
- 03,13,23: kathodenseitiger Wasserkreislauf
- 04,14,24: anodenseitiger Teilstromzweig
- 05,15,25: kathodenseitiger Teilstromzweig
- 06, 26: anodenseitiger Reinigungszweig
- 07, 27: kathodenseitiger Reinigungszweig
- 08,18,28: Querstromverbindung
- 31: Elektrolysezellen
- 32: Anodenkammer
- 33: Kathodenkammer
- 34: Sauerstoff-Separator
- 35: Wasserstoff-Separator
- 36: Hauptpumpe
- 37: Kühleinrichtung
- 38: Filtereinrichtung
- 42: Abzweig
- 43: Sammelpunkt
- 46: Teilstrompumpe
- 47: Bypass
- 48: Filtereinrichtung
- 49: Hilfsionentauscher
- 56: Reinigungspumpe
- 57: Kühleinrichtung
- 58: Filtereinrichtung
- 59: Hauptionentauscher
- 66: Querstrompumpe
- 67: Kühleinrichtung
- 68: Filtereinrichtung
- 69: Querstromionentauscher

## Patentansprüche

1. Elektrolysesystem (01,11,21) zur elektrochemischen Erzeugung von Wasserstoff und Sauerstoff umfassend
- mehrere Elektrolysezellen (31), welche (31) jeweils eine Anodenkammer (32) mit einer Anode und auf einer durch eine Membran getrennten gegenüberliegenden Seite eine Kathodenkammer (33) mit einer Kathode aufweist, wobei bestimmungsgemäß zwischen Anode und Kathode eine Spannung angelegt werden kann; und
- einen anodenseitigen Wasserkreislauf (02,12,22), welcher (02,12,22) von einem anodenseitigen Auslass zu einem anodenseitigen Einlass der Anodenkammern (32) führt und einen Sauerstoff-Separator (34) und eine Hauptpumpe (36) und eine Kühleinrichtung (37) aufweist; und insbesondere
- einen kathodenseitigen Wasserkreislauf (03,13,23), welcher (03,13,23) von einem kathodenseitigen Auslass zu einem kathodenseitigen Einlass der Kathodenkammer (33) führt und einen Wasserstoff-Separator (35) und eine Hauptpumpe (36) und eine Kühleinrichtung (37) aufweist, **gekennzeichnet durch**
einen anodenseitigen Teilstromzweig (04, 14, 24), welcher (04, 14, 24) von einem Abzweig (42) zu einem Sammelpunkt (43) im anodenseitigen Wasserkreislauf (02,12,22) führt und einen Hilfsionentauscher (49) aufweist; und insbesondere einen kathodenseitigen Teilstromzweig (04, 15, 25), welcher (04, 15, 25) von einem Abzweig (42) zu einem Sammelpunkt (43) im kathodenseitigen Wasserkreislauf (03,13,23) führt und einen Hilfsionentauscher (49) aufweist.

2. Elektrolysesystem (01,11,21) nach Anspruch 1,
wobei zwischen dem Abzweig (42) und dem Sammelpunkt (43) auf der einen Seite der Separator (34; 35) und die Hauptpumpe (36) und die Kühleinrichtung (37) und auf der anderen Seite die Elektrolysezelle angeordnet sind.

3. Elektrolysesystem (01,11,21) nach Anspruch 1 oder 2, wobei im Teilstromzweig (04,14,24; 05,15,25) eine Teilstrompumpe (46) angeordnet ist.

4. Elektrolysesystem (11) nach Anspruch 4,
wobei der Teilstromzweig (14; 15) einen schaltbaren Bypass (47) zur Teilstrompumpe (46) aufweist.

5. Elektrolysesystem (01,21) nach einem der Ansprüche 1 bis 4,
wobei an dem Wasserkreislauf (02,22; 03,23) ein Reinigungszweig (06,26; 07,27) mit einem Hauptionentauscher (59) angeschlossen ist.

6. Elektrolysesystem (01) nach Anspruch 5,
wobei der Reinigungszweig (06; 07) mit beiden Enden am Separator (34; 35) angeschlossen ist und eine Reinigungspumpe (56), und insbesondere eine Kühleinrichtung (57), umfasst.

7. Elektrolysesystem (21) nach Anspruch 5 oder 6,
wobei der Reinigungszweig (26; 27) mit einem Ende am Separator (34; 35) und mit dem anderen Ende am Wasserkreislauf (22; 23) in Strömungsrichtung nachfolgend der Hauptpumpe (36), insbesondere nachfolgend der Kühleinrichtung (37), angeschlossen ist.

8. Elektrolysesystem (21) nach Anspruch 7,
wobei eine Strömungsrichtung aus dem Separator (34; 35) über die Hauptpumpe (36) und den Reinigungszweig (26; 27) zurück in den Separator (34; 35) festgelegt ist.

9. Elektrolysesystem nach Anspruch 7 oder 8,
wobei der Reinigungszweig eine Reinigungspumpe umfasst und eine Strömungsrichtung aus dem Separator durch den Reinigungszweig in den Wasserkreislauf festgelegt ist.

10. Elektrolysesystem (01,11,21) nach einem der Ansprüche 1 bis 9,
wobei im Wasserkreislauf (02,12,22; 03,13,23) und/oder im Teilstromzweig (04,14,24; 05,15,25) und/oder im Reinigungszweig (06,26; 07,27) eine Filtereinrichtung (38, 48, 58) angeordnet ist.

11. Elektrolysesystem (01,11,21) nach einem der Ansprüche 1 bis 10,
wobei eine Querstromverbindung (08,18,28) vom kathodenseitigen Wasserkreislauf (03,13,23) oder vom kathodenseitigen Teilstromzweig (05,15,25) oder vom kathodenseitigen Reinigungszweig (07,27) zum anodenseitigen Wasserkreislauf (02,12,22) vorhanden ist.

12. Elektrolysesystem (01) nach Anspruch 11,
wobei die Querstromverbindung (08,18,28) zum Sauerstoff-Separator (34) führt.

13. Elektrolysesystem (01,11,21) nach Anspruch 11 oder 12, wobei die Querstromverbindung (08) vom Wasserstoff-Separator (35) abzweigt; oder
wobei die Querstromverbindung (18) vom kathodenseitigen Teilstromzweig (15), insbesondere in Strömungsrichtung nachfolgend dem Hilfsionentauscher (49), abzweigt; oder wobei die Querstromverbindung (28) vom kathodenseitigen Reinigungszweig (27), insbesondere in Strömungsrichtung nachfolgend dem Hauptionentauscher (59), abzweigt.

14. Elektrolysesystem (01,11,21) nach einem der Ansprüche 11 bis 13,
wobei in der Querstromverbindung (08) ein Querstromionentauscher (69) und eine Querstrompumpe (66) und insbesondere eine Kühleinrichtung (67) und insbesondere eine Filtereinrichtung (68) angeordnet ist.
